**Europäisches Patentamt**

**European Patent Office**

**Office européen des brevets**

(19)

(11) Veröffentlichungsnummer: **0 207 393**
**B1**

## (12) EUROPÄISCHE PATENTSCHRIFT

(45) Veröffentlichungstag der Patentschrift:
23.08.89

(21) Anmeldenummer: 86108405.1

(22) Anmeldetag: 20.06.86

(51) Int. Cl.⁴: **B 60 G 17/04**

(54) **Hydraulisches Niveauregelventil.**

(30) Priorität: 04.07.85 DE 3523908
05.09.85 DE 3531685

(43) Veröffentlichungstag der Anmeldung:
07.01.87 Patentblatt 87/2

(45) Bekanntmachung des Hinweises auf die Patenterteilung:
23.08.89 Patentblatt 89/34

(84) Benannte Vertragsstaaten:
DE FR GB IT

(56) Entgegenhaltungen:
DE-A-2 453 787
DE-A-2 932 298
US-A-3 825 243

(73) Patentinhaber: b a r m a g Barmer
Maschinenfabrik Aktiengesellschaft, Leverkuser
Strasse 65 Postfach 110 240, D-5630 Remscheid 11
(DE)

(72) Erfinder: Hertell, Siegfried, am Kattenbusch 22a,
D-5608 Radevormwald (DE)

(74) Vertreter: Pfingsten, Dieter, Dipl.- Ing., barmag
Barmer Maschinenfabrik AG Leverkuser Strasse
65 Postfach 110240, D-5630 Remscheid 11 (DE)

EP 0 207 393 B1

**Beschreibung**

Die Erfindung bezieht sich auf das Niveauregelventil nach der DE-A-2 932 298. Auf die Beschreibung dieser Offenlegungsschrift wird Bezug genommen und die Beschreibung wird ausdrücklich zum Gegenstand auch dieser Beschreibung gemacht.

In Kraftfahrzeugen hängt die Relativlage zwischen Karosserie und Fahrzeugachse, d. h. das Niveau der Karosserie und damit auch die Bodenfreiheit der Karosserie im wesentlichen auch von der jeweiligen Belastung des Kraftfahrzeugs ab. Zur Behebung dieses Nachteils sind hydraulische Systeme bekannt, die neben einer Hydraulikpumpe einen hydraulischen Speicher erhalten, durch dessen Speichermenge das Niveau der Karosserie bestimmt wird, wobei die Speichermenge dieses Speichers durch ein Niveauregelventil geregelt wird. Dieses Niveauregelventil mißt die Relativlage zwischen Karosserie und Fahrzeugachse und gibt in Abhängigkeit davon den Durchfluß von einer Ölpumpe, die von dem Fahrzeugmotor angetrieben wird, zu dem Speicher oder einem im wesentlichen drucklosen Öltank frei.

Die Messung des Niveaus und die Steuerung des Ölstroms zwischen Pumpe, Tank und Speicher erfolgt in dem Niveauregelventil dadurch, daß ein Steuerkolben einerseits und das Ventilgehäuse andererseits verbunden sind mit der Fahrzeugachse einerseits und der Karosserie andererseits.

Derartige Niveauregelventile müssen neben bestimmten funktionellen Voraussetzungen insbesondere höhe Anforderungen an Robustheit, Lebensdauer und Wartungsfreundlichkeit erfüllen.

Diese Anforderungen werden durch das nach der DE-A-2 932 298 vorgeschlagene Niveauregelventil erfüllt.

Diese Erfindung bezweckt eine Erweiterung des Arbeitsbereiches des gezeigten Niveauregelventils. Der Arbeitsbereich ist dabei als der Schwenkwinkel bezeichnet, den der mit der Fahrzeugachse in Verbindung stehende Hebel gegenüber dem an der Karosserie des Fahrzeugs angebrachten Gehäuse des Niveauregelventils und damit auch dessen Drehschieber zwischen der höchsten und der niedrigsten Niveaustellung des Kraftfahrzeugs überstreicht.

Die Lösung ergibt sich aus Anspruch 1. Es wird hierdurch für den gesamten Arbeitsbereich eine ungedrosselte Verbindung zwischen dem Speicherkanal und dem Tankkanal geschaffen, die nur von der Drehstellung des Drehschiebers abhängig ist, deren Drosselwiderstand sich nicht mit der Drehstellung ändert und die auch nicht anfällig gegen Verschmutzen und Verstopfen ist. Die weitere Ausgestaltung nach Anspruch 2 ist fertigungstechnisch einfach herzustellen. Die Ausführung nach Anspruch 4 hat den Vorteil, daß sie auch bei vorhandenen Niveauregelventilen ohne Eingriff in die Konstruktion anwendbar ist.

Das Ausführungsbeispiel nach Anspruch 5 zeichnet sich dadurch aus, daß die Einmündung des Speicherkanals sowie der Stößel 18 an einem beliebigen Punkt der axialen Länge des Drehschiebers 4 liegen können.

Im folgenden werden drei Ausführungsbeispiele der Erfindung beschrieben. Dabei wird von der Beschreibung des Ausführungsbeispiels in der genannten Offenlegungsschrift ausgegangen.

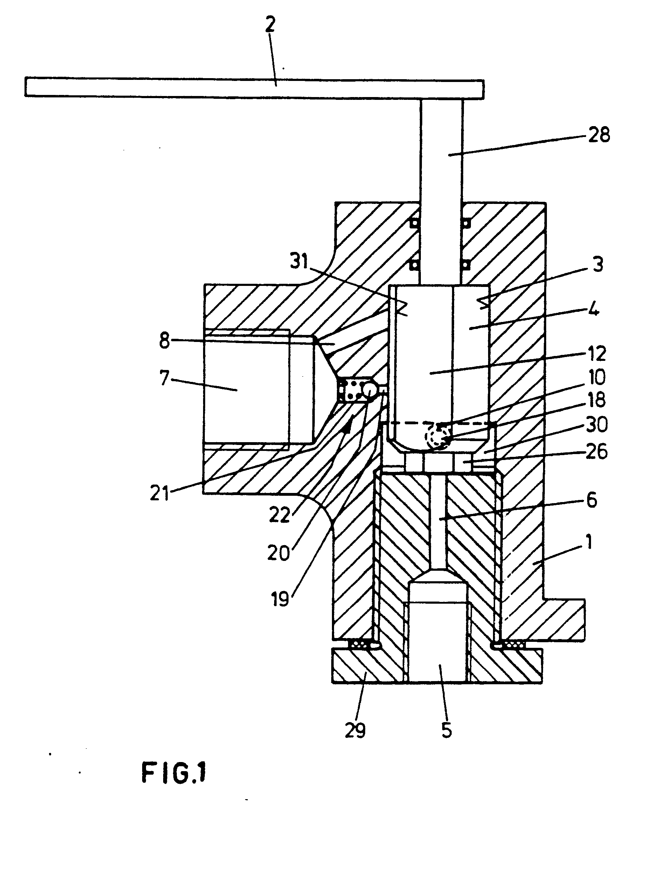

Die Ausführungsbeispiele nach den Figuren 1 bis 3 haben die folgende Beschreibung gemeinsam. Für diese gemeinsame Beschreibung werden die Fig. 1 bis 3 gleichermaßen herangezogen:

In dem Drehschiebergehäuse 1 ist die Achse 28 mit dem daran befestigten Hebel 2 drehbar gelagert. In der Bohrung 3 befindet sich der Drehschieber 4, welcher auf der Achse 28 sitzt. Der Drehschieber ist ein zylindrischer Körper, welcher längs zweier Mantellinien die Abflachung 11 besitzt. Die Abflachung schließt im wesentlichen den Mittelpunktswinkel Beta ein. Die Drehschieberbohrung ist an ihrem freien Ende durch den eingeschraubten Stopfen 29 verschlossen. Der Drehschieber 4 wird in seiner axialen Lage durch Stopfen 29 einerseits sowie Distanzring 26 festgelegt. Es kann auch beidseits zur Kräftekompensation eine Druckbeaufschlagung erfolgen. In die Drehschieberbohrung mündet der Pumpenkanal 6, welcher konzentrisch zur Drehschieberbohrung angebracht ist. Der Pumpenkanal ist mit der nicht dargestellten Pumpe über den Pumpenanschluß 5 verbunden. Der Distanzring besitzt radiale Durchtritte, so daß die Stirnseite des Drehschiebers sowie die durch die Abflachung des Drehschiebers entstehende Aussparung 12 mit Öl beaufschlagt wird. Der in der Drehschieberbohrung 3 durch die Aussparung des Drehschiebers 4 entstehende Raum wird im Rahmen dieser Anmeldung als Verteilerraum 12 bezeichnet. Dieser Verteilerraum 12 erstreckt sich über die axiale Länge des Drehschiebers 4.

Wie insbesondere aus der DE-A-2 932 298 und aus Fig. 2 ersichtlich, besitzt das Drehschiebergehäuse 1 zwei Arme, welche kniegelenkförmig angeordnet sind und zwischen sich ebenfalls ungefähr den Winkel Beta einschließen. In den Armen liegt einerseits Tankanschluß 7 und andererseis Speicheranschluß 9. Als Tank wird hier ein druckloser, nicht dargestellter Behälter bezeichnet, aus welchem mittels Ölpumpe Öl entnommen und in den das überschüssige Öl wieder zurückgeführt wird. Als Speicher werden hier nicht dargestellte, hydraulisch betätigte Federbeine des Kraftfahrzeugs oder zwischen diesen und dem Niveauregelventil gelegene, hydraulische Speicher bezeichnet.

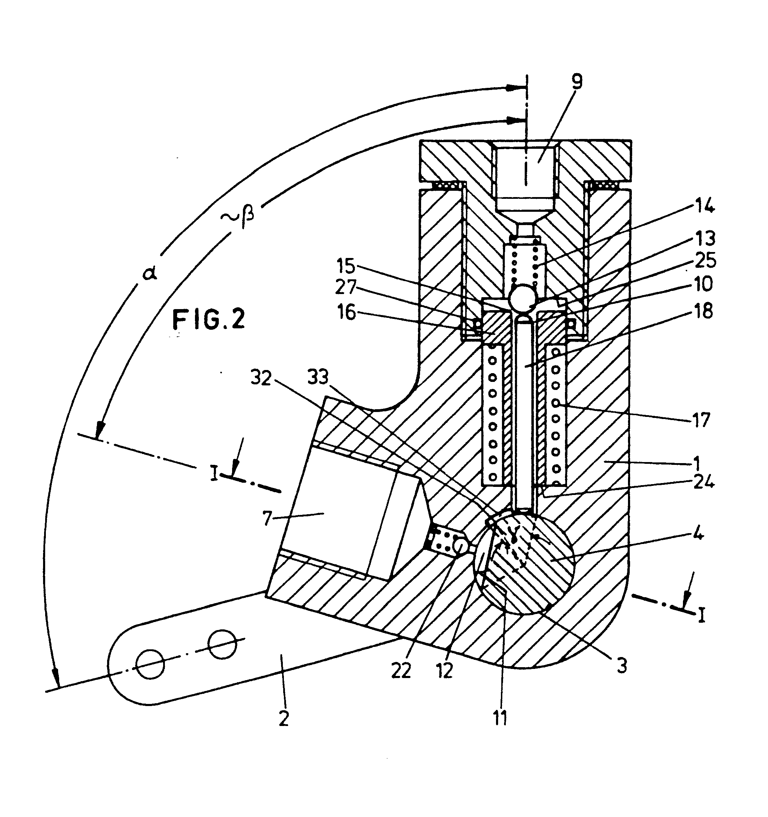

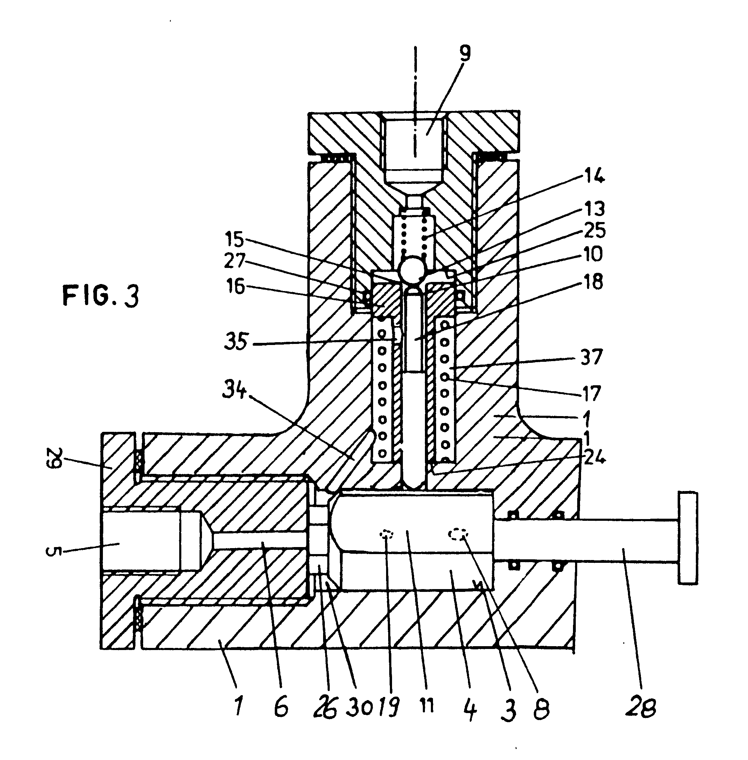

Der Tankkanal 8 sowie der Speicherkanal 10 münden radial in die Drehschieberbohrung, und zwar - in axialer Richtung gesehen - gegeneinander auf dem Umfang versetzt. Zwischen dem Verteilerraum 12 und dem Tankkanalanschluß 7 ist ferner ein Überdruckventil 22 (s. Fig. 1 und 2) vorgesehen, welches aus Kugel 20 und Feder 21 besteht. Der Speicherkanal 10 ist zum Teil in dem Kolben 16 (s. Fig. 2 und 3) geführt. Der Kolben 16 ist in einem Zylinderraum gegen die Kraft der Druckfeder 17 beweglich. Auf der vom Drehschieber 4 abgewandten Seite des Kolbens befindet sich im Kugelsitz 15 eine Kugel 13, welche durch Feder 14 auf den Sitz 15 gedrückt wird. Die Kugel kann durch Stößel 18 von dem Sitz 15 bei Drehung des Drehschiebers 4 abgehoben werden, wenn der Stößel 18 mit dem kreisförmigen Querschnittsteil des Drehschiebers 4 oder kurz davor kämmt. Der Kolben 16 ist gegenüber dem Gehäuse durch ein Dichtelement 27 abgedichtet. Der

2

Speicherdruck wird also gegenüber dem Niveauregelventil allein durch Kugel 13 und Kugelsitz 15 sowie das Dichtelement 27 abgehalten. In dieser geringen Zahl von Dichtelementen liegt ein besonderer Vorteil des Ventils.

Die Feder 17 sowie die Kolbenfläche des Kolbens 16 auf der dem Speicheranschluß 9 zugewandten Seite sind so dimensioniert, daß die von dem Speicherdruck auf den Kolben 16 ausgeübte Kraft die Federkraft 17 überwiegt, solange der Speicherdruck über einem bestimmten, vorgewählten Minimaldruck von z. B. 30 bar liegt. Unterschreitet der Speicherdruck den vorgewählten Minimaldruck, so drückt die Feder 17 den Kolben aus der unteren Position, die durch Anschlag 24 definiert ist, in eine obere, durch Anschlag 25 definierte Position. Der Stößel 18 ist nun so dimensioniert, daß er die Kugel 13 in dieser oberen Position des Kolbens 16 nicht erreicht, auch wenn er mit dem kreisförmigen Querschnitt des Drehschiebers 4 kämmt. Die Feder 14 ist verhältnismäßig schwach und besitzt vorzugsweise eine lineare Federcharakteristik, so daß ihr Einfluß auf den Gleichgewichtszustand der Kräfte am Kolben 16 vernachlässigbar ist.

Es sei erwähnt, daß der Stößel 18 bei den Ausführungen nach Fig. 1 und Fig. 2 einen kleineren Querschnitt als der Speicherkanal 10 hat, so daß der Ölfluß dort möglich ist. Die Stößel- und Kanalausführung nach Fig. 3 wird später beschrieben.

Das Spiel des Drehschiebers gegenüber der Drehschieberbohrung im Bereich der Mündung des Tankkanals 8 ist gering, so daß hier über den Umfang des Drehschiebers 4 nur vernachlässigbare Ölmengen abfließen und Öl erst dann abfließen kann, wenn der Verteilerraum 12 die Mündung des Tankkanals 8 zumindest teilweise überdeckt.

Das Ausführungsbeispiel nach Fig. 1 ist ein Niveauregelventil, bei dem der Speicherkanal 10 und der Bypasskanal 19 zum Tankkanal 7 in unterschiedlichen Normalebenen liegen. Dargestellt ist der Hebel 2, der an der Fahrzeugachse angelenkt ist sowie das Gehäuse 1, das an der Karosserie angelenkt ist. Am Hebel 2 sitzt die Achse 28 mit dem Drehschieber 4. Der Drehschieber sitzt in einer Drehschieberbohrung 3. Der vordere Teil 30 der Drehschieberbohrung, in welchen der Pumpenanschluß 5 und Pumpenkanal 6 einmündet, besitzt einen größeren Durchmesser als die übrige Drehschieberbohrung 3, wobei hinzuzufügen ist, daß die übrige Drehschieberbohrung 3 denselben Durchmesser hat wie der zylindrische Teil des Drehschiebers 4. Der Speicherkanal 10, dessen Mündung gestrichelt eingezeichnet ist, liegt in einer Normalebene des vorderen Teils 30 der Drehschieberbohrung. Der Vollständigkeit halber sei angemerkt, daß in Fig. 1 auch der Stößel 18 gestrichelt eingezeichnet ist, welcher in dem Speicherkanal 10 liegt. Der Bypass 19 zum Tankkanal sowie der Tankkanal liegen in dem axialen Bereich des Drehschiebers 4, der dichtend in dem hinteren Teil der Drehschieberbohrung 3 liegt.

Demnach steht der Speicherkanal 10 und damit auch der Speicher bei Drehung des Drehschiebers 4, also unabhängig von der Niveaulage des Kraftfahrzeugs, in ständiger ungedrosselter Verbindung mit dem Pumpenanschluß 5 und Pumpenkanal 6. Der Pumpenkanal tritt zusätzlich auch in Verbindung mit dem Tankanschluß 8, wenn der Verteilerraum 12 den Mündungsbereich des Tankkanals 8 überdeckt. Maßgeblich für diese Verbindung und die Größe dieser Verbindung ist also nur die Lage der Steuerkante 31 der Anfasung am Drehschieber 4, welche den Verteilerraum in der Drehschieberbohrung 3 bildet.

Das Ausführungsbeispiel nach Fig. 2 entspricht dem Ausführungsbeispiel nach Fig. 1 in der Offenlegungsschrift 29 32 298. Das heißt, daß der Tankkanal 7, 8 und der Bypasskanal 19 sowie der Speicherkanal 10 in einer gemeinsamen Normalebene liegen. Der Arbeitsbereich des Niveauregelventils ist jedoch durch eine Nut 33 erweitert. Diese Nut ist in die Wandung der Drehschieberbohrung im Anschluß an die Öffnung des Speicherkanals 10 eingebracht. Der Zentriwinkel, den die Nut unter Einschluß der Rückseite des Speicherkanals 10 einschließt, entspricht im wesentlichen dem Arbeitsbereich.

Es ist gezeigt, daß die hintere Kante 32 der Anfasung am Drehschieber 4, die den Verteilerraum 12 bildet, gerade noch das Ende der Nut 33 überdeckt. Das bedeutet, daß auch in dieser Stellung noch über die Nut 33 und den Verteilerraum 12 eine Verbindung zwischen dem Speicherkanal 10 und dem Tankanschluß 7, 8 (bezüglich Tankkanal vgl. Fig. 1) besteht. Der gesamte Zentriwinkel, der den Arbeitsbereich des Niveauregelventils bezeichnet, ist mit dem griechischen Buchstaben gamma bezeichnet.

Wie man sieht, ist in der eingezeichneten Stellung des Drehschiebers der Stößel 18 hochgehoben und die Kugel 13 von ihrem Sitz 15 abgehoben, so daß die Entladung des Speichers zum Tank möglich ist.

Das dritte Ausführungsbeispiel ist in Fig. 3 in einem Schnitt dargestellt, in dem die Achse des Drehschiebers sowie die Achse des Speicherkanals 10 liegt. Diese Ebene ist gegenüber der Ebene nach Fig. 1 um den Winkel Beta, der aus Fig. 2 ersichtlich ist, um die Achse des Drehschiebers versetzt. Bezüglich der Lage des Tankkanals 7 und 8 sowie aller übrigen Teile kann auf Fig. 1 und die Beschreibung hierzu sowie sie obengenannte Offenlegungsschrift verwiesen werden.

Die Besonderheit dieses Ausführungsbeispiels besteht darin, daß der Federraum 33, in dem der Kolben 16 beweglich ist, durch einen Stichkanal 34 mit dem vorderen Teil 30 der Drehschieberbohrung 3 verbunden ist. Der Federraum 33 ist andererseits über eine Bohrung 35 im Schaft des Kolbens 36 mit dem Speicherkanal 10 im Inneren des Kolbens 16 verbunden. Hierdurch wird gewährleistet, daß die Verbindung zwischen dem Pumpenanschluß 5, Pumpenkanal 5 sowie dem vorderen Teil 30 der Drehschieberbohrung einerseits und dem Speicherkanal andererseits ohne Rücksicht auf die Drehstellung des Drehschiebers 4 ständig gegeben ist. Hiermit erreicht man, daß die axiale Lage des Kolbens 16 mit dem Speicherkanal 10 und dem Stößel 18 frei den konstruktiven Gegebenheiten angepaßt werden kann und nicht durch die hydraulische Forderung bestimmt ist, daß der vordere Teil 30 der Drehschieberbohrung ständig mit dem Speicherkanal verbunden sein soll.

In Fig. 3 ist ferner dargestellt, daß der untere Teil des Stößels 18 den Speicherkanal 10 im Zentrum des

3

Kolbens 16 fast ausfüllt. Auf diese Weise ist der Stößel 18 drehbar und axial verschieblich in der Bohrung des Speicherkanals 10 gelagert. Ferner steht die Achse des Drehschiebers 4 nicht exakt senkrecht auf der Achse des Drehschiebers 18. Dadurch wird bewirkt, daß der Drehschieber mit seiner balligen Unterseite bei Drehung des Drehschiebers 4 eine Rollbewegung ausführt. Dadurch wird vermieden, daß der Stößel 18 stets mit derselben Stelle an dem Drehschieber anliegt und dort einem einseitigen Verschleiß unterworfen ist. Bei dieser Ausführung des Stößels 18 kann der Stößel auch zweiteilig ausgeführt sein und aus einem dicken, unteren Teil und dem schlankeren, oberen Teil bestehen.

Zur Funktion des Niveauregelventils wird auf die DE-A-2 932 298 verwiesen.

**Bezugszeichenaufstellung**

    1  Gehäuse (Drehschiebergehäuse)
    2  Hebel
    3  Bohrung (Drehschieberbohrung)
    4  Drehschieber
    5  Pumpenanschluß
    6  Pumpenkanal
    7  Tankanschluß
    8  Tankkanal
    9  Speicheranschluß
    10  Speicherkanal
    11  Aussparung (Abflachung)
    12  Verteilerraum
    13  Kugel
    14  Feder
    15  Kugelsitz
    16  Kolben
    17  Feder
    18  Stößel
    19  Bypasskanal
    20  Kugel
    21  Feder
    22  Überdruckventil
    23  Rinne
    24  Anschlag
    25  Anschlag
    26  Distanzring
    27  Dichtung
    28  Achse
    29  Stopfen
    30  vorderer Teil der Drehschieberbohrung
    31  Steuerkante
    32  hintere Kante der Anfasung
    33  Nut, Verbindungsnut
    34  Stichkanal
    35  Bohrung
    36  unterer Teil des Stößels
    37  Federraum

**Patentansprüche**

1. Hydraulisches Niveauregelventil für Kraftfahrzeugfederungen
mit Pumpenkanal, Tankkanal und Speicherkanal zum Ausgleich statischer Niveauänderungen der Karosserie gegenüber der Fahrzeugachse mittels eines hydraulischen Speichers und einem von einer Pumpe zu einem Tank bzw. dem Speicher geförderten Ölstrom,
mit den Merkmalen:

1.1 Ein Drehschieber (4) mit kreisförmigem Querschnitt ist in der Drehschieberbohrung (3) eines Drehschiebergehäuses (1) drehbar;
1.2 Drehschieber (4) einerseits und Gehäuse (1) andererseits sind mit der Karosserie einerseits und der Fahrzeugachse andererseits derart verbunden, daß die relative Drehlage des Drehschiebers in dem Gehäuse von dem Niveaustand zwischen Karosserie und Fahrzeugachse bestimmt wird;
1.3 der Drehschieber (4) besitzt zumindest über eine Teillänge eine Aussparung (11) seines kreisförmigen

4

Querschnitts, welche durch zwei Mantellinien begrenzt wird und mit der Drehschieberbohrung (3) einen diese in Längsrichtung über einen Teilquerschnitt ausfüllenden Verteilerraum (12) bildet;

1.4 der Pumpenkanal (6) mündet in die Drehschieberbohrung und kommuniziert in allen Drehlagen des Drehschiebers mit dem Verteilerraum (12) der Drehschieberbohrung (3);

1.5 der Tankkanal (8) zweigt radial von der Drehschieberbohrung ab und verbindet den Verteilerraum (12) in einem bestimmten Winkelbereich von Drehschieberlagen mit dem im wesentlichen drucklosen Tank des hydraulischen Systems des Kraftfahrzeugs;

1.6 der Speicherkanal (10) zweigt radial von der Drehschieberbohrung (3) ab und verbindet den Verteilerraum (12) je nach Drehlage des Drehschiebers (4) zeitweise mit dem das Niveau der Karosserie bestimmenden Speicher des Kraftfahrzeugs;

1.7 ein Kugelventil (13) mit Kugelsitz (15) ist konzentrisch in dem Speicherkanal (19) angeordnet und gegen die Auslaßeinrichtung des Speicherkanals federbelastet (Feder 14);

1.8 ein Stößel (18) ist in dem Speicherkanal (10) in dessen Längsrichtung beweglich angeordnet, der einen kleineren Querschnitt als der Speicherkanal (10) besitzt und die mechanische Verbindung zwischen dem Drehschieber bzw. dessen Aussparung (11) und der Kugel (13) derart bildet, daß die Kugel von ihrem Sitz (15) abgehoben wird, sobald der Drehschieber (4) mit seinem im wesentlichen vollen Kreisquerschnitt vor der Mündung des Speicherkanals (10) steht,

dadurch gekennzeichnet, daß
der Speicherkanal (10) mit dem Pumpenkanal (6) im Arbeitsbereich des Ventils eine ständige, von der Drehlage des Drehschiebers (4) unabhängige hydraulische Verbindung (33, 34) aufweist.

2. Niveauregelventil nach Anspruch 1,
dadurch gekennzeichnet, daß
der Speicherkanal und der Tankanschluß - über die axiale Länge des Drehschiebers gesehen - versetzt angeordnet in der Drehschieberbohrung münden,
wobei die Mündung des Speicherkanals (10) in dem Bereich des Drehschiebers liegt, der dem Pumpenanschluß benachbart ist und in dem die Drehschieberbohrung einen größeren Durchmesser als der Drehschieber hat.

3. Niveauregelventil nach Anspruch 2,
dadurch gekennzeichnet, daß
der Tankanschluß (8) in einem axialen Bereich des Drehschiebers liegt, in dem der Drehschieber denselben Durchmesser wie die Drehschieberbohrung hat.

4. Niveauregelventil nach Anspruch 1,
dadurch gekennzeichnet, daß
der Speicherkanal (10) in die Drehschieberbohrung (3) mit einer sich in Umfangsrichtung erstreckenden Nut (33) einmündet, wobei die Nut von einem Zentriwinkel eingeschlossen wird, welcher dem Arbeitsbereich des Niveauregelventils entspricht.

5. Niveauregelvertil nach Anspruch 1, dadurch gekennzeichnet, daß
der Federraum (37), in dem der Kolben (16) geführt ist, durch einen Stichkanal (34) mit dem vorderen Teil (30) der Drehschieberbohrung und hierüber mit dem Pumpenkanal (6) in Verbindung steht
und daß der Federraum (37) durch eine Bohrung (35) mit dem im Inneren des Kolbens (16) verlaufenden Speicherkanal verbunden ist.

6. Niveauregelventil nach einem der vorangegangenen Ansprüche,
dadurch gekennzeichnet, daß
der Stößel (18) ein dem Drehschieber (4) zugewandtes, dickes Ende besitzt, welches in dem Speicherkanal (10) drehbar und axial verschiebbar mit geringem Spiel gelagert ist.

7. Niveauregelventil nach Anspruch 6,
dadurch gekennzeichnet, daß
der Stößel zweiteilig ausgeführt ist und aus dem dicken, unteren Teil und dem schlanken, oberen Teil besteht.

8. Niveauregelventil nach einem der vorangegangenen Ansprüche,
dadurch gekennzeichnet, daß
die Achse des Stößels (18) und die Achse des Drehschiebers (4) einen Winkel einschließen, der ungleich 90° ist.

**Claims**

1. Hydraulic level control valve for motor vehicle suspensions, having a pump channel, tank channel and accumulator channel for compensating static level changes of the body with respect to the vehicle axle by means of a hydraulic accumulator and an oil stream delivered by a pump to a tank or to the accumulator, having the following features:

1.1 A rotary valve (4) having a circular cross-section can be rotated in the rotary valve bore (3) of a rotary valve housing (1);

1.2 Rotary valve (4) on the one hand and housing (1) on the other hand are connected, on the one hand, to the body and, on the other hand, to the vehicle axle in such a way that the relative rotational position of the rotary valve in the housing is determined by the relative level of body and vehicle axle;

1.3 The rotary valve (4) has over at least part of its length a recess (11) of its circular cross-section, which recess is bounded by two circumferential lines on the surface and, together with the rotary valve bore (3), forms a distributor space (12) occupying the latter in the longitudinal direction over a part cross-section;

1.4 The pump channel (6) opens into the rotary valve bore and communicates in all rotational positions of the rotary valve with the distributor space (12) of the rotary valve bore (3);

1.5 The tank channel (8) branches off radially from the rotary valve bore and connects the distributor space (12) in a certain angular range of rotary valve positions to the essentially unpressurized tank of the hydraulic system of the motor vehicle;

1.6 The accumulator channel (10) branches off radially from the rotary valve bore (3) and, depending on the rotational position of the rotary valve (4) connects the distributor space (12) from time to time with the motor vehicle accumulator determining the level of the body;

1.7 A ball valve (13) having a ball seat (15) is arranged concentrically in the accumulator channel (19) and is spring-loaded (spring 14) counter to the outlet arrangement of the accumulator channel;

1.8 A tappet (18) is arranged in the accumulator channel (10) so as to be movable in the longitudinal direction of the latter, has a smaller cross-section than the accumulator channel (10) and forms the mechanical connection between the rotary valve or its recess (11) and the ball (13) in such a way that the ball is lifted from its seat (15) as soon as essentially the full circular cross-section of the rotary valve (4) is present in front of the mouth of the accumulator channel (10),

characterized in that, in the working range of the valve, the accumulator channel (10) exhibits a constant hydraulic connection (33, 34), independent of the rotational position of the rotary valve (4), to the pump channel (6).

2. Level control valve according to Claim 1, characterized in that, as seen over the axial length of the rotary valve, the accumulator channel and the tank connection open at offset locations into the rotary valve bore, the mouth of the accumulator channel (10) being situated in the region of the rotary valve which is next to the pump connection and in which the rotary valve bore has a larger diameter than the rotary valve.

3. Level control valve according to Claim 2, characterized in that the tank connection (8) is situated in an axial region of the rotary valve in which the rotary valve has the same diameter as the rotary valve bore.

4. Level control valve according to Claim 1, characterized in that the accumulator channel (10) opens into the rotary valve bore (3) with a groove (33) extending in the circumferential direction, the groove being enclosed by a centre-angle which corresponds to the working range of the level control valve.

5. Level control valve according to Claim 1, characterized in that the spring space (37) in which the piston (16) is guided communicates by a branch channel (34) with the forward part (30) of the rotary valve bore and via said part with the pump channel (6), and in that the spring space (37) is connected by a bore (35) to the accumulator channel extending in the interior of the piston (16).

6. Level control valve according to one of the preceding claims, characterized in that the tappet (18) has a thick end which is turned towards the rotary valve (4), and is mounted rotatably and axially dispalceably with slight play in the accumulator channel (10).

7. Level control valve according to Claim 6, characterized in that the tappet is of two-part design and comprises the thick lower part and the thin upper part.

8. Level control valve according to one of the preceding claims, characterized in that the axis of the tappet (18) and the axis of the rotary valve (4) enclose an angle which is not equal to 90°.

## Revendications

1. Valve hydraulique de régulation de niveau pour des suspensions de véhicules automobiles comprenant un canal de pompe, un canal de réservoir et un canal d'accumulateur pour compenser des variations statiques de niveau de la carrosserie par rapport à l'essieu du véhicule à l'aide d'un accumulateur hydraulique et d'un flux d'huile acheminé par une pompe vers un réservoir et vers l'accumulateur, présentant les caractéristiques suivantes:

1.1 Un tiroir rotatif (4) de section transversale circulaire est mobile en rotation dans l'alésage de tiroir rotatif (3) d'un corps de tiroir rotatif (1);

1.2 le tiroir rotatif (4) d'une part, et le corps (1) d'autre part, sont reliés d'une part à la carrosserie et d'autre part à l'essieu du véhicule de telle sorte que la position angulaire relative du tiroir rotatif dans le corps soit déterminée par le niveau de la carrosserie par rapport à l'essieu du véhicule;

1.3 le tiroir rotatif (4) possède au moins sur une longueur partielle une échancrure (11) pratiquée dans sa section transversale circulaire, délimitée par deux génératrices et formant avec l'alésage de tiroir rotatif (3) une chambre de répartition (12) remplissant ledit alésage en direction longitudinale sur une section transversale

EP 0 207 393 B1

partielle;

1.4 le canal de pompe (6) débouche dans l'alésage de tiroir rotatif et communique dans toutes les positions angulaires du tiroir rotatif avec la chambre de répartition (12) de l'alésage de tiroir rotatif (3);

1.5 le canal de réservoir (8) bifurque radialement de l'alésage de tiroir rotatif et relie la chambre de répartition (12), dans une certaine plage de positions angulaires du tiroir rotatif, au réservoir essentiellement hors pression du système hydraulique du véhicule automobile;

1.6 le canal d'accumulateur (10) bifurque radialement de l'alésage de tiroir rotatif (3) et relie la chambre de répartition (12), selon la position angulaire du tiroir rotatif (4), temporairement à l'accumulateur du véhicule automobile déterminant le niveau de la carosserie;

1.7 un clapet à bille (13) muni d'un siège de bille (15) est disposé concentriquement dans le canal d'accumulateur (10) et est sollicité par un ressort (ressort 14) en opposition à la direction de sortie du canal d'accumulateur;

1.8 un poussoir (18) disposé dans le canal d'accumulateur (10) de manière mobile dans la direction longitudinale de ce dernier possède une section transversale inférieure à celle du canal d'accumulateur (10) et constitue la liaison mécanique entre le tiroir rotatif ou l'évidement (11) de ce dernier et la bille (13) de telle sorte que la bille soit soulevée de son siège (15) dès que la section transversale circulaire essentiellement pleine du tiroir rotatif (4) se trouve devant l'ouverture du canal d'accumulateur (10),

caractérisée en ce que le canal d'accumulateur (10) présente, dans la plage de travail de la valve, une liaison hydraulique constante (33, 34), indépendante de la position angulaire du tiroir rotatif (4), avec le canal de pompe (6).

2. Valve de régulation du niveau selon la revendication 1, caractérisée en ce que le canal d'accumulateur et le raccord du réservoir débouchent dans l'alésage de tiroir rotatif en étant décalés suivant la longueur axiale du tiroir rotatif, l'ouverture du canal d'accumulateur (10) se trouvant dans la zone du tiroir rotatif qui est voisine du raccord de pompe et dans laquelle l'alésage de tiroir rotatif a un diamètre plus grand que le tiroir rotatif.

3. Valve de régulation de niveau selon la revendication 2, caractérisée en ce que le raccord de réservoir (8) se trouve dans une zone axiale du tiroir rotatif dans laquelle le tiroir rotatif a le même diamètre que l'alésage de tiroir rotatif.

4. Valve de régulation de niveau selon la revendication 1, caractérisée en ce que le canal d'accumulateur (10) débouche dans l'alésage de tiroir rotatif (3) par une gorge (33) s'étendant en direction circonférentielle, la gorge étant comprise dans un angle au centre qui correspond à la plage de travail de la valve de régulation de niveau.

5. Valve de régulation de niveau selon la revendication 1, caractérisée en ce que l'espace de ressort (37) dans lequel le piston (16) est guidé, communique par un canal latéral (34) avec la partie avant (30) de l'alésage de tiroir rotatif et de là avec le canal de pompe (6) et en ce que l'espace de ressort (37) est relié par un trou (35) au canal d'accumulateur s'étendant à l'intérieur du piston (16).

6. Valve de régulation de niveau selon l'une des revendications précédentes, caractérisée en ce que le poussoir (18) possède une extrémité épaisse qui est tournée vers le tiroir rotatif (4) et est montée avec un faible jeu dans le canal d'accumulateur (10) de manière à être mobile en rotation et en translation axiale.

7. Valve de régulation de niveau selon la revendication 6, caractérisée en ce que le poussoir est réalisé en deux parties et est composé de la partie inférieure épaisse et de la partie supérieure fine.

8. Valve de régulation de niveau selon l'une des revendications précédentes, caractérisée en ce que l'axe du poussoir (18) et l'axe du tiroir rotatif (4) font un angle qui est différent de 90°.

7

FIG.1

FIG.2

EP 0 207 393 B1

FIG. 3